# EUROPEAN PATENT APPLICATION

(11) **EP 4 803 807 A1**
(43) Date of publication of application: **09.09.2026**
(21) Application number: 24888888.5
(22) Date of filing: 30.07.2024
(51) Int. Cl.: F24C 7/08, F24C 3/12, F24C 15/00, A47J 36/32, G06Q 50/10, H04N 7/18, G06T 5/50, G06T 7/00, G06N 20/00

(54) **COOKING APPLIANCE AND OPERATION METHOD THEREOF**

(30) Priority: 08.11.2023 KR 20230153977
(71) Applicant: LG Electronics Inc., Yeongdeungpo-gu Seoul 07336 (KR)
(72) Inventor: LEE, Joongkeun, Seoul 08592 (KR)
(74) Representative: Ter Meer Steinmeister & Partner
(86) International application number: PCT/KR2024/011071
(87) International publication number: WO 2025/100692

(57) **Abstract**

Disclosed are a cooking appliance and an operation method thereof. A cooking appliance according to at least one of various embodiments of the present invention comprises at least one door and a main body, wherein the main body includes: a storage unit; an image acquisition unit for acquiring an image of the inside of a refrigerator including an object to be cooked; a heating unit for heating the object to be cooked; and a control unit which identifies the object to be cooked by adjusting brightness values for the object to be cooked and a background included in the image of the inside of the refrigerator, and controls a cooking operation for the object to be cooked.

## Description

### [Technical Field]

The present disclosure relates to a cooking appliance and an operation method thereof.

### [Background Art]

Cooking appliances such as ovens in households are widely used. Such cooking appliances can perform cooking in various manners according to food materials. However, the cooking appliance not only requires a user to manually operate the cooking appliance for cooking, but also requires the user to frequently check a cooking state.

Accordingly, cooking appliances capable of automatic cooking have been developed, but conventional cooking appliances merely perform a cooking method manually input by a user as it is. For example, conventional cooking appliances have a problem in that they cannot respond to various events that may occur in a cooking process other than a predetermined routine.

### [Disclosure]

### [Technical Problem]

In order to solve the above-described problems, an object of the present disclosure is to provide a cooking appliance and an operation method thereof that process an interior image so that an object to be cooked can be well recognized from the interior image.

Another object of the present disclosure is to provide a cooking appliance and an operation method thereof that remove or minimize a door reflection image when the door reflection image is included in the interior image.

### [Technical Solution]

According to at least one of various embodiments of the present disclosure for achieving the above-described object, a cooking appliance including at least one door and a main body, the main body may include: a storage; an image acquisition unit configured to obtain an interior image including an object to be cooked; a heating unit configured to heat the object to be cooked; and a controller configured to identify the object to be cooked by adjusting brightness values of the object to be cooked and a background included in the interior image, and to control a cooking operation for the object to be cooked.

### [Advantageous Effects]

According to at least one of various embodiments of the present disclosure, the following effects may be obtained.

First, an advantage in that recognition accuracy of the object to be cooked from the interior image can be improved, thereby improving accuracy and/or convenience of using the cooking appliance.

Second, an advantage in that the door reflection image can be removed or minimized when the door reflection image is included in the interior image.

Third, an advantage in that a security issue can be resolved by minimizing exposure of personal information included in the door reflection image included in the interior image.

### [Description of Drawings]

FIG. 1 illustrates an AI device according to an embodiment of the present disclosure.
FIG. 2 illustrates an AI server according to an embodiment of the present disclosure.
FIG. 3 illustrates an AI system according to an embodiment of the present disclosure.
FIG. 4 is a perspective view illustrating an embodiment of a cooking appliance according to the present disclosure.
FIG. 5 is a perspective view illustrating a door viewed from a front side of the cooking appliance.
FIG. 6 is a perspective view illustrating the door viewed from a rear side of the cooking appliance.
FIG. 7 is an exploded perspective view of the door.
FIGS. 8 and 9 are views for explaining a cause of formation of a door reflection image.
FIGS. 10 and 11 are control block diagrams of a cooking appliance according to an embodiment of the present disclosure.
FIG. 12 is a flowchart for explaining an operation of a cooking appliance for minimizing door reflection according to an embodiment of the present disclosure.
FIGS. 13 to 15 are views for explaining an interior image processing operation of a controller according to the present disclosure.

### [Best Mode]

Hereinafter, some embodiments of the present disclosure will be described in detail with reference to illustrative drawings. In assigning reference numerals to components of each drawing, it should be noted that identical components are designated by identical reference numerals as much as possible even when they are illustrated in different drawings. In addition, in describing the embodiments of the present disclosure, when it is determined that a detailed description of a related known configuration or function may obscure the gist of the embodiments of the present disclosure, the detailed description thereof will be omitted.

Artificial intelligence refers to a field of studying artificial intelligence or methodologies for creating the same, and machine learning refers to a field of studying methodologies for defining various problems dealt with in the field of artificial intelligence and solving the same. Machine learning may also be defined as an algorithm that improves performance for a specific task through continuous experience.

An artificial neural network (ANN) is a model used in machine learning, and may refer to an overall model having problem-solving capability, which is composed of artificial neurons (nodes) forming a network through synaptic connections. The artificial neural network may be defined by connection patterns between neurons of different layers, a training process for updating model parameters, and an activation function for generating an output value.

The artificial neural network may include an input layer, an output layer, and optionally one or more hidden layers. Each layer may include one or more neurons, and the artificial neural network may include synapses connecting neurons to neurons. In the artificial neural network, each neuron may output a function value of an activation function with respect to input signals input through synapses, weights, and biases.

Model parameters refer to parameters determined through training, and may include weights of synaptic connections and biases of neurons. Hyperparameters refer to parameters that are set before training in a machine learning algorithm, and may include a learning rate, the number of iterations, a mini-batch size, an initialization function, and the like.

An objective of training of the artificial neural network may be regarded as determining model parameters that minimize a loss function. The loss function may be used as an indicator for determining optimal model parameters in the training process of the artificial neural network.

Machine learning may be classified into supervised learning, unsupervised learning, and reinforcement learning according to a learning scheme.

Supervised learning refers to a method of training an artificial neural network in a state in which a label for training data is given, and the label may refer to a correct answer (or a result value) to be inferred by the artificial neural network when the training data is input to the artificial neural network. Unsupervised learning refers to a method of training an artificial neural network in a state in which a label for training data is not given. Reinforcement learning refers to a learning method in which an agent defined in a certain environment is trained to select an action or a sequence of actions that maximizes cumulative reward in each state.

Among artificial neural networks, machine learning implemented as a deep neural network (DNN) including a plurality of hidden layers is also referred to as deep learning, and deep learning is a part of machine learning. Hereinafter, machine learning is used to include deep learning.

Object detection models using machine learning include a single-stage method You Only Look Once (YOLO) model and a two-stage method Faster Region-based Convolution Neural Network (R-CNN) model.

The YOLO model is a model capable of predicting an object existing in an image and a position of the object by viewing the image only once.

The YOLO model divides an original image into grids having the same size. Then, for each grid, the number of bounding boxes designated in a predefined form centered on a center of the grid is predicted, and reliability is calculated based on the predicted bounding boxes.

Thereafter, whether an object is included in the image or only a background is included is determined, and a position having high object reliability is selected so that an object category may be identified.

The Faster R-CNN model is a model capable of detecting an object faster than an R-CNN model and a Fast R-CNN model.

The Faster R-CNN model will be described in detail.

First, a feature map is extracted from an image through a Convolution Neural Network (CNN) model. Based on the extracted feature map, a plurality of regions of interest (RoIs) are extracted. RoI pooling is performed on each of the regions of interest.

RoI pooling is a process of extracting a feature map having an H x W size by setting a grid to match a preset H x W size on a feature map onto which a region of interest is projected, and extracting a maximum value for each cell included in the grid.

A feature vector is extracted from the feature map having the H x W size, and object identification information may be obtained from the feature vector.

A robot may refer to a machine that automatically processes or operates a given task by its own capability. In particular, a robot having a function of recognizing an environment and autonomously determining and performing an operation may be referred to as an intelligent robot.

The robot may be classified into an industrial robot, a medical robot, a household robot, a military robot, and the like according to a purpose or a field of use.

The robot may include a driving unit including an actuator or a motor to perform various physical operations such as moving joints of the robot. In addition, a movable robot may include wheels, brakes, propellers, and the like in the driving unit, and may travel on the ground or fly in the air through the driving unit.

Extended reality refers to virtual reality (VR), augmented reality (AR), and mixed reality (MR). The VR technology provides only computer graphic (CG) images of objects or backgrounds of the real world, the AR technology provides CG images created virtually together with actual object images, and the MR technology is a computer graphics technology that mixes and combines virtual objects with the real world.

The MR technology is similar to the AR technology in that a real object and a virtual object are shown together. However, in the AR technology, the virtual object is used to complement the real object, whereas in the MR technology, the virtual object and the real object are used with equivalent properties.

The XR technology may be applied to a head-mounted display (HMD), a head-up display (HUD), a cooking appliance, a mobile phone, a tablet PC, a laptop, a desktop, a TV, a digital signage, and the like, and a device to which XR technology is applied may be referred to as an XR device.

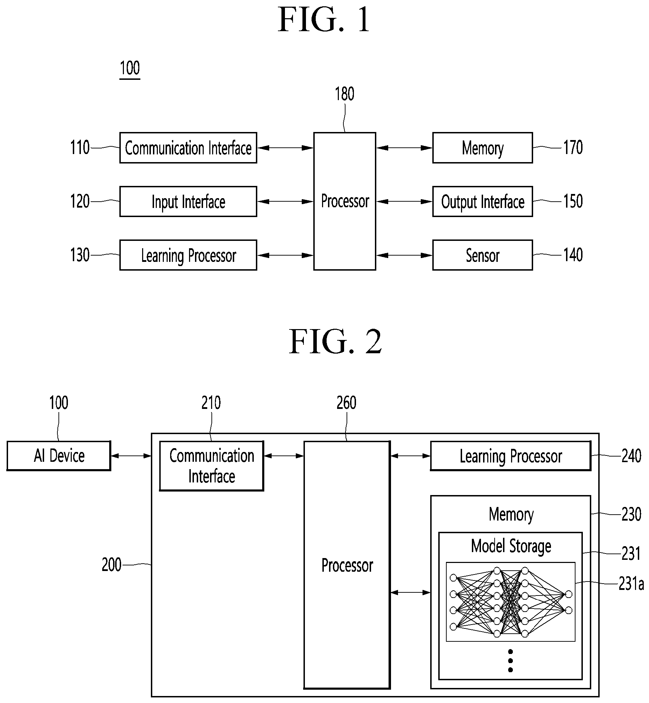

FIG. 1 illustrates an AI device 100 according to an embodiment of the present disclosure.

The AI device 100 may include a cooking appliance. In addition, the AI device 100 may be implemented as a stationary device or a movable device such as a TV, a projector, a mobile phone, a smartphone, a desktop computer, a laptop computer, a tablet PC, a wearable device, a set-top box (STB), a radio, a washing machine, a refrigerator, a desktop computer, a digital signage, a robot, and the like.

Referring to FIG. 1, the AI device 100 may include a communication unit 110, an input unit 120, a learning processor 130, a sensing unit 140, an output unit 150, a memory 170, and a processor 180.

The communication unit 110 may transmit and receive data to and from external devices such as other AI devices 100a to 100d or an AI server 200 by using wired or wireless communication technology. For example, the communication unit 110 may transmit and receive sensor information, user input, a learning model, a control signal, and the like with external devices.

Communication technology used by the communication unit 110 may include Global System for Mobile communication (GSM), Code Division Multi Access (CDMA), Long Term Evolution (LTE), 5G, Wireless LAN (WLAN), Wireless-Fidelity (Wi-Fi), Bluetooth^{™}, Radio Frequency Identification (RFID), infrared communication (Infrared Data Association; IrDA), ZigBee, Near Field Communication (NFC), and the like.

The input unit 120 may acquire various types of data.

The input unit 120 may include a camera for inputting an image signal, a microphone for receiving an audio signal, and a user input unit for receiving information from a user. Here, the camera or the microphone may be treated as a sensor, and a signal obtained from the camera or the microphone may be referred to as sensing data or sensor information.

The input unit 120 may acquire input data to be used when obtaining an output using training data and a learning model for model training. The input unit 120 may acquire unprocessed input data, and in this case, the processor 180 or the learning processor 130 may extract input features from the input data as preprocessing.

The learning processor 130 may train a model configured as an artificial neural network by using training data. The trained artificial neural network may be referred to as a learning model. The learning model may be used to infer a result value for new input data other than the training data, and the inferred value may be used as a basis for determining to perform a certain operation.

The learning processor 130 may perform AI processing together with a learning processor 240 of the AI server 200.

The learning processor 130 may include a memory integrated with or implemented in the AI device 100. Alternatively, the learning processor 130 may be implemented using the memory 170, an external memory directly coupled to the AI device 100, or a memory maintained in an external device.

The sensing unit 140 may acquire at least one of internal information of the AI device 100, surrounding environment information of the AI device 100, and user information by using various sensors.

Sensors included in the sensing unit 140 may include a proximity sensor, an illuminance sensor, an acceleration sensor, a magnetic sensor, a gyro sensor, an inertial sensor, an RGB sensor, an IR sensor, a fingerprint recognition sensor, an ultrasonic sensor, an optical sensor, a microphone, a LiDAR, a radar, and the like.

The output unit 150 may generate outputs related to vision, hearing, or touch. The output unit 150 may include a display unit for outputting visual information, a speaker for outputting auditory information, and a haptic module for outputting tactile information.

The memory 170 may store data supporting various functions of the AI device 100. For example, the memory 170 may store input data acquired by the input unit 120, training data, a learning model, a training history, and the like.

The processor 180 may determine at least one executable operation of the AI device 100 based on information determined or generated using a data analysis algorithm or a machine learning algorithm. In addition, the processor 180 may control components of the AI device 100 to perform the determined operation.

To this end, the processor 180 may request, retrieve, receive, or utilize data of the learning processor 130 or the memory 170, and may control components of the AI device 100 to execute a predicted operation or an operation determined to be preferable among the at least one executable operation.

When interworking with an external device is required to perform the determined operation, the processor 180 may generate a control signal for controlling the external device and transmit the generated control signal to the external device.

The processor 180 may acquire intention information for a user input and determine a requirement of a user based on the acquired intention information.

The processor 180 may acquire intention information corresponding to the user input by using at least one of a Speech To Text (STT) engine for converting a voice input into a text string or a Natural Language Processing (NLP) engine for acquiring intention information of natural language.

At least a part of at least one of the STT engine or the NLP engine may be configured as an artificial neural network trained according to a machine learning algorithm. In addition, at least one of the STT engine or the NLP engine may be trained by the learning processor 130, trained by the learning processor 240 of the AI server 200, or trained by distributed processing thereof.

The processor 180 may collect history information including operation contents of the AI device 100 or user feedback on the operation, and store the collected history information in the memory 170 or the learning processor 130, or transmit the collected history information to an external device such as the AI server 200. The collected history information may be used to update the learning model.

The processor 180 may control at least some of components of the AI device 100 in order to drive an application program stored in the memory 170. Furthermore, the processor 180 may operate two or more of the components included in the AI device 100 in combination with each other in order to drive the application program.

FIG. 2 illustrates an AI server 200 according to an embodiment of the present disclosure.

Referring to FIG. 2, the AI server 200 may refer to a device that trains an artificial neural network using a machine learning algorithm or uses a trained artificial neural network. Here, the AI server 200 may be configured as a plurality of servers to perform distributed processing, or may be defined as a 5G network. In this case, the AI server 200 may be included as a part of the AI device 100 and may perform at least a portion of AI processing together.

The AI server 200 may include a communication unit 210, a memory 230, a learning processor 240, and a processor 260.

The communication unit 210 may transmit and receive data to and from external devices such as the AI device 100.

The memory 230 may include a model storage 231. The model storage 231 may store a model (or artificial neural network, 231a) being trained or trained through the learning processor 240.

The learning processor 240 may train the artificial neural network 231a by using training data. The learning model may be used in a state mounted in the AI server 200, or may be mounted in an external device such as the AI device 100 and used.

The learning model may be implemented by hardware, software, or a combination of hardware and software. When at least a part of the learning model is implemented by software, one or more instructions constituting the learning model may be stored in the memory 230.

The processor 260 may infer a result value for new input data by using the learning model, and may generate a response or a control command based on the inferred result value.

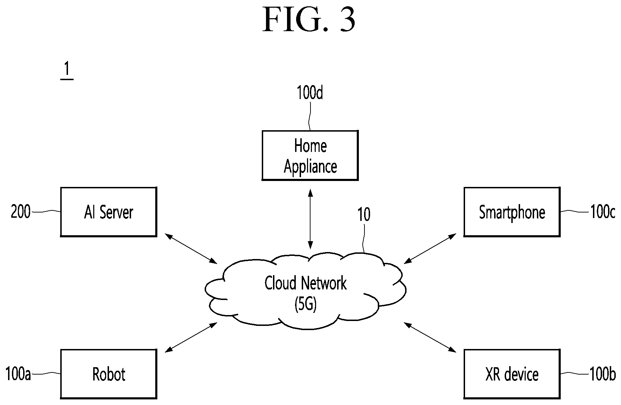

FIG. 3 illustrates an AI system 1 according to an embodiment of the present disclosure.

Referring to FIG. 3, the AI system 1 may be connected to a cloud network 10 by at least one of an AI server 200, a robot 100a, an XR device 100b, a smartphone 100c, or a home appliance 100d. Here, the robot 100a, the XR device 100b, the smartphone 100c, or the home appliance 100d to which AI technology is applied may be referred to as AI devices 100a to 100d.

The cloud network 10 may refer to a network forming a part of a cloud computing infrastructure or existing within the cloud computing infrastructure. Here, the cloud network 10 may be configured by using a 3G network, a 4G or LTE network, a 5G network, or the like.

That is, respective devices 100a to 100d and 200 constituting the AI system 1 may be connected to each other through the cloud network 10. In particular, the respective devices 100a to 100d and 200 may communicate with each other through a base station or may directly communicate with each other without passing through the base station.

The AI server 200 may include a server performing AI processing and a server performing computation on big data.

The AI server 200 may be connected to at least one of the XR device 100b, the smartphone 100c, or the home appliance 100d, which are AI devices constituting the AI system 1, through the cloud network 10, and may assist at least a portion of AI processing of the connected AI devices 100a to 100d.

In this case, the AI server 200 may train an artificial neural network according to a machine learning algorithm on behalf of the AI devices 100a to 100d, and may directly store a learning model or transmit the learning model to the AI devices 100a to 100d.

In this case, the AI server 200 may receive input data from the AI devices 100a to 100d, infer a result value for the received input data by using the learning model, and generate a response or a control command based on the inferred result value, and transmit the response or the control command to the AI devices 100a to 100d.

Alternatively, the AI devices 100a to 100d may directly infer a result value for input data by using the learning model, and generate a response or a control command based on the inferred result value.

Hereinafter, various embodiments of the AI devices 100a to 100d to which the above-described technology is applied will be described. Here, the AI devices 100a to 100d illustrated in FIG. 3 may be regarded as specific embodiments of the AI device 100 illustrated in FIG. 1.

The robot 100a may be implemented as a guide robot, a transport robot, a cleaning robot, a wearable robot, an entertainment robot, a pet robot, an unmanned aerial robot, and the like, by applying AI technology.

The robot 100a may include a robot control module for controlling an operation, and the robot control module may refer to a software module or a chip implementing the same in hardware.

The robot 100a may acquire state information of the robot 100a, detect (recognize) surrounding environment and objects, generate map data, determine a movement path and a travel plan, determine a response to user interaction, or determine an operation by using sensor information acquired from various types of sensors.

Here, in order to determine a movement path and a travel plan, the robot 100a may use sensor information acquired from at least one of a LiDAR, a radar, or a camera.

The robot 100a may perform the above-described operations by using a learning model composed of at least one artificial neural network. For example, the robot 100a may recognize a surrounding environment and objects by using the learning model, and determine an operation by using recognized surrounding environment information or object information. Here, the learning model may be directly trained in the robot 100a or may be trained in an external device such as the AI server 200.

In this case, the robot 100a may directly generate a result by using the learning model to perform an operation, or may transmit sensor information to an external device such as the AI server 200 and receive a result generated accordingly to perform an operation.

The robot 100a may determine a movement path and a travel plan by using at least one of map data, object information detected from sensor information, or object information acquired from an external device, and may control a driving unit to drive the robot 100a according to the determined movement path and travel plan.

The map data may include object identification information on various objects arranged in a space in which the robot 100a moves. For example, the map data may include object identification information on fixed objects such as walls and doors and movable objects such as flowerpots and desks. In addition, the object identification information may include a name, a type, a distance, a position, and the like.

In addition, the robot 100a may perform an operation or travel by controlling the driving unit based on control/interaction of a user. In this case, the robot 100a may acquire intention information of interaction according to a user action or voice utterance, determine a response based on the acquired intention information, and perform an operation.

The XR device 100b may be implemented as an HMD, a HUD provided in a vehicle, a television, a mobile phone, a smartphone, a computer, a wearable device, a home appliance, a digital signage, a vehicle, a fixed robot, a mobile robot, and the like, by applying AI technology.

The XR device 100b may acquire information on a surrounding space or a real object by analyzing three-dimensional point cloud data or image data acquired through various sensors or from an external device to generate position data and attribute data on three-dimensional points, and may render and output an XR object to be output. For example, the XR device 100b may output an XR object including additional information on a recognized object in correspondence with the recognized object.

The XR device 100b may perform the above-described operations by using a learning model composed of at least one artificial neural network. For example, the XR device 100b may recognize a real object from three-dimensional point cloud data or image data by using the learning model, and may provide information corresponding to the recognized real object. Here, the learning model may be directly trained in the XR device 100b or may be trained in an external device such as the AI server 200.

In this case, the XR device 100b may directly generate a result by using the learning model to perform an operation, or may transmit sensor information to an external device such as the AI server 200 and receive a result generated accordingly to perform an operation.

The above-described AI device 100 may be or include a cooking appliance. Hereinafter, for convenience of description, the AI device 100 will be described as a cooking appliance. Such a cooking appliance 100 may include an oven.

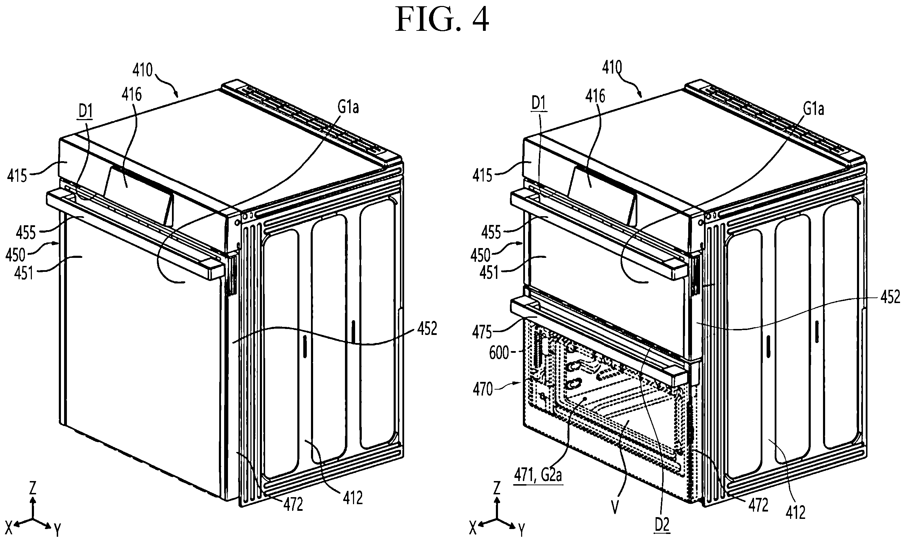

In (a) of FIG. 4, a cooking appliance 100 employing a single door is illustrated, and in (b) of FIG. 4, a cooking appliance 100 employing dual doors is illustrated. However, the cooking appliance 100 according to the present disclosure is not limited only to the examples illustrated in (a) and (b) of FIG. 4.

The cooking appliance 100 may include an accommodation space (or a cooking chamber or an interior) in which an object to be cooked (F) may be placed therein. A door may be disposed at a front of the accommodation space so that the accommodation space can be opened and closed. Here, the front may indicate a direction toward a user when the user is positioned in front of the cooking appliance 100 (for example, an X-axis direction in (a) and (b) of FIG. 4). In (a) and (b) of FIG. 4, a Y-axis direction may indicate a width direction of the doors 450 and 470, and a Z-axis direction may indicate a height direction of the doors 450 and 470. Hereinafter, description will be made based on these directions.

Description will be made by taking a cooking appliance 100 employing two doors as an example, but each door may be referred to as a first door 450 or an upper door 450 and a second door 470 or a lower door 470.

Referring to FIGS. 1 and 2, the doors 450 and 470 may include an image acquisition unit 600, and the image acquisition unit 600 may include at least one image sensing device 670 to obtain an interior image (hereinafter, "interior image") of the accommodation space.

The doors 450 and 470 may include at least one lighting device 680 so that an internal illuminance of the accommodation space can be adjusted.

The image acquisition unit 600 may be provided inside the doors 450 and 470 or may be detachably attached to the doors 450 and 470. The image sensing device 670 may include at least one image sensor such as a camera sensor. The lighting device 680 may include an LED (Light Emitting Diode).

Referring to FIG. 4, a main body 410 of the cooking appliance is implemented in a hexahedral shape, but is not limited thereto.

Referring to (a) of FIG. 4, although one door 450 is employed in the main body 410 of the cooking appliance, one or a plurality of accommodation spaces may be disposed in the cooking appliance 100.

Referring to (b) of FIG. 4, two doors 450 and 470 included in the main body 410 of the cooking appliance may be disposed at different heights from each other. Each of the doors 450 and 470 may open and close and/or shield different accommodation spaces.

Referring to FIG. 4, a panel 415 may be provided at an upper portion of the cooking appliance 100. An operation unit 416 may be provided on the panel 415. The operation unit 416 may display various information that can be provided by the cooking appliance 100. For example, the operation unit 416 may display information on a manual cooking state or an automatic cooking state of the cooking appliance 100, information on a recommended menu, and the like.

The first door 450 and the second door 470 may each be operated in a kind of pull-down method in which an upper end thereof vertically rotates about a lower end thereof. As another example, the first door 450 and the second door 470 may each be operated in a side swing method in which the first door 450 and the second door 470 are opened sideways.

Referring to (b) of FIG. 4, an upper frame portion may be disposed at an upper portion 452 of the first door, and a front surface 451 of the first door may have a structure capable of seeing through the first accommodation space. For example, the front surface 451 of the first door may have a panel structure made of a glass material, so that a user may observe the inside of the first accommodation space through a front panel G1a of the first door 450. As another example, the front surface 451 of the first door may be made of a dark material or coated with a separate film so that the first accommodation space may not be seen through from the outside. Handles 455 and 475 for opening and closing the doors 450 and 470 may be provided on the doors 450 and 470.

The second door 470 may be disposed below the first door 450. Through a front surface of the second door 470, the second accommodation space may be seen through. A user may observe the inside of the second accommodation space through the front surface of the second door 470.

A see-through portion V may be provided in the second door 470. The see-through portion V is for seeing through the second accommodation space from the outside, and may be made of a transparent material. The see-through portion V may also be regarded as a part of a second front panel G2a constituting the front surface of the second door 470. The see-through portion V may be provided at a central portion of the second front panel G2a. For example, an edge portion of the second front panel G2a may have a material having higher surface roughness than the see-through portion V, or a separate opaque film may be applied to the edge portion of the second front panel G2a. In this case, the edge portion of the second front panel G2a, excluding the see-through portion V, cannot see through the second accommodation space.

As another example, an edge of the second front panel G2a corresponding to an outside of the see-through portion V may be covered by door frames 472 and 477. Here, the outside of the see-through portion V may refer to an edge portion of the second front panel G2a disposed to surround an edge of the see-through portion V around the see-through portion V.

As still another example, the second door 470 may be made of a dark material or coated with a separate film so that the accommodation space may not be seen through from the outside. As still another example, in the second door 470, a second door panel G2 to be described later may be omitted, and an opaque metal or non-metal plate may constitute a front surface. Even in this case, the second accommodation space may not be seen through from the outside.

The inside of the accommodation space may be photographed by the image acquisition unit 600. In this case, the accommodation space may not only be photographed by the image sensing device 670 constituting the image acquisition unit 600, but also may have increased illuminance by the lighting device 680 constituting the image acquisition unit 600.

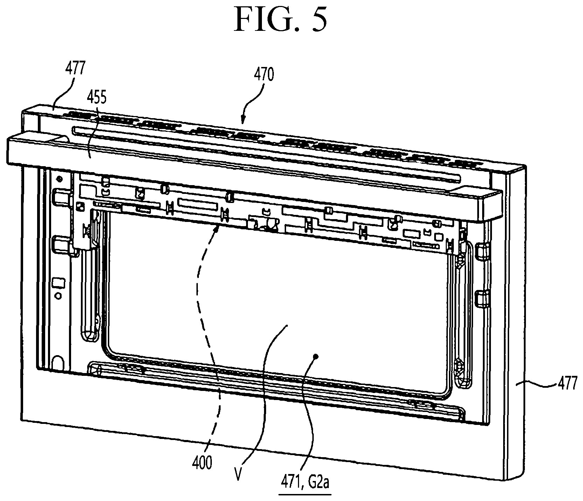

Referring to FIGS. 5 to 7, the image sensing device 670 may be disposed at a center of the image acquisition unit 600. A plurality of lighting devices 680 may be respectively disposed on both sides around the image sensing device 670. The plurality of lighting devices 680 may increase illuminance of the accommodation space so that the image sensing device 670 can obtain a clearer image.

The plurality of lighting devices 680 may be disposed to face the accommodation space, and may irradiate light to the accommodation space. The plurality of lighting devices 680 may illuminate the accommodation space at different angles. Accordingly, illuminance of the entire area of the accommodation space may be uniformly increased. Specifically, the plurality of lighting devices 680 may illuminate an upper surface and a lower surface of the accommodation space, and left and right side surfaces.

Among the plurality of lighting devices 680, a first lighting unit 680a disposed relatively close to the image sensing device 670 may be disposed on left and right sides around the image sensing device 670, respectively, and configured as a pair. Among the plurality of lighting devices 680, a second lighting unit 680b may be disposed outside the first lighting unit 680a. Like the first lighting unit 180a, the second lighting unit 680b may also be disposed on both sides around the image sensing device 670, respectively, so that a pair of second lighting units 680b may be provided.

Meanwhile, ranges in which light is irradiated by the plurality of lighting devices 680 may overlap each other. Specifically, a pair of first lighting units 680a may irradiate light biased toward a center direction of the accommodation space based on a left-right direction, and may overlap each other in a certain area. An area in which light irradiated by the pair of first lighting units 680a overlaps each other may be included in a central portion of the accommodation space. Accordingly, illuminance of the object to be cooked (F) disposed at the central portion of the accommodation space may be relatively higher than surroundings.

In addition, an area to which the second lighting unit 680b irradiates light and an area in the left-right direction to which the first lighting unit 680a irradiates light may also overlap each other. An area to which light of the first lighting unit 680a is irradiated partially overlaps an area to which light of the second lighting unit 680b is irradiated, thereby forming an area having high illuminance at the central portion of the accommodation space based on the left-right direction. Since the object to be cooked (F) is disposed at the central portion of the accommodation space based on the left-right direction, the lighting device 680 may illuminate the object to be cooked (F) more brightly.

In this case, directions in which the first lighting unit 680a and the second lighting unit 680b irradiate light may be set differently from each other. The first lighting unit 680a may face relatively toward the central portion of the accommodation space more than the second lighting unit 680b. Specifically, the first lighting unit 680a irradiates light in a direction biased toward the central portion in the left-right direction of the accommodation space in which the object to be cooked (F) is located, more than the second lighting unit 680b. Accordingly, the first lighting unit 680a and the second lighting unit 680b may minimize or eliminate a shaded area by irradiating light to a wider area based on the left-right direction.

Meanwhile, based on an up-down direction (the Z-axis direction of FIG. 4), a direction in which the second lighting unit 680b irradiates light may be set differently from a direction in which the first lighting unit 680a irradiates light. Specifically, the second lighting unit 680b irradiates light in a direction biased toward a bottom of the accommodation space more than the first lighting unit 680a. Accordingly, the first lighting unit 680a and the second lighting unit 680b may eliminate a shaded area by irradiating light to a wider area based on the up-down direction (the Z-axis direction of FIG. 4).

In addition, an area to which the second lighting unit 680b irradiates light and an area in the up-down direction (the Z-axis direction of FIG. 4) to which the first lighting unit 680a irradiates light may also overlap each other. An area to which light of the first lighting unit 680a is irradiated partially overlaps an area to which light of the second lighting unit 680b is irradiated, thereby forming an area having high illuminance at the central portion of the accommodation space based on the up-down direction (the Z-axis direction of FIG. 4). Since the object to be cooked (F) is disposed at the central portion of the accommodation space based on the up-down direction (the Z-axis direction of FIG. 4), the lighting device 680 may illuminate the object to be cooked (F) more brightly.

Hereinafter, a structure for illuminating the inside of the accommodation space and obtaining an image through the image acquisition unit 600 will be described in detail.

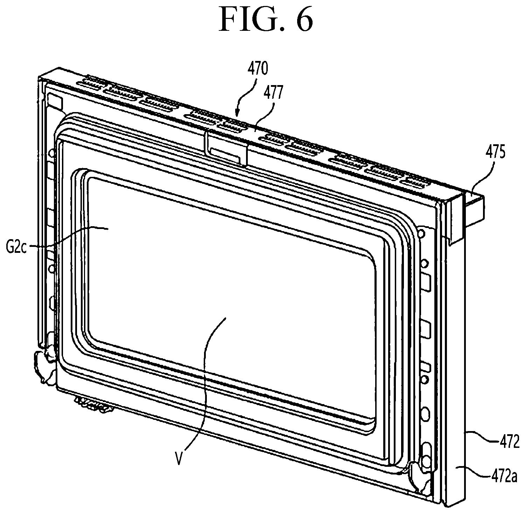

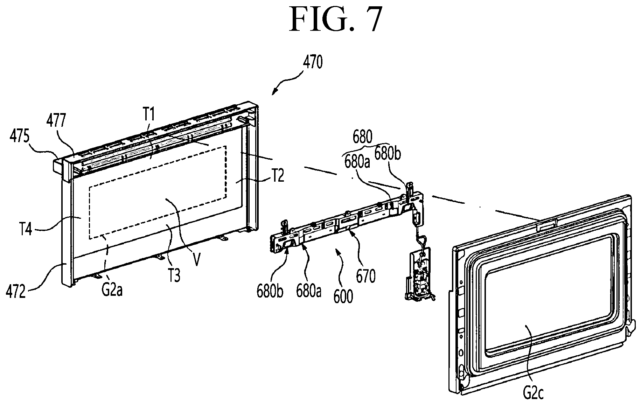

FIGS. 5 and 6 respectively illustrate states in which the doors 450 and 470 are viewed from a front side and a rear side of the cooking appliance 100. FIG. 7 illustrates an exploded view of the door.

A front surface of the doors 450 and 470 may have a planar structure. For example, surfaces of front panels G1a and G2a may constitute the front surfaces of the respective doors 450 and 470.

A see-through portion V may be provided at a central portion of the front surface of the doors 450 and 470. The see-through portion V is a portion made of a transparent or semi-transparent material so that the accommodation space can be observed from the outside. A part of a center of the front panels G1a and G2a may become the see-through portion V. The see-through portion V may not be configured as a separate object from the front panels G1a and G2a, and may be a part of the front panels G1a and G2a.

The image acquisition unit 600 may be disposed inside the doors 450 and 470. The image acquisition unit 600 may obtain an internal image of the accommodation space through the see-through portion V of the doors 450 and 470, and may display the internal image or generate an image or video and deliver the image or video to a user. The video may include a time-lapse video.

Referring to FIG. 5, the image acquisition unit 600 disposed inside the doors 450 and 470 is illustrated as being exposed to the outside. In the present embodiment, the image acquisition unit 600 is not visible from the outside of the doors 450 and 470, but FIG. 5 illustrates the image acquisition unit 600 as being exposed in order to express a position at which the image acquisition unit 600 is disposed. The image acquisition unit 600 may be disposed in a direction toward the accommodation space (rearward based on FIG. 5).

The image acquisition unit 600 may be disposed outside the see-through portion V inside the doors 450 and 470. Here, the outside means a portion surrounding an edge of the see-through portion V. Referring to FIG. 7, the image acquisition unit 600 may be disposed in installation areas T1-T4 disposed outside the edge of the see-through portion V. FIG. 5 illustrates a state in which most of the image acquisition unit 600 is disposed above the see-through portion V. As another example, the image acquisition unit 600 may be disposed at left and right side portions or a lower portion of the see-through portion V.

Skeletons of the doors 450 and 470 may be formed by a door body. The door body may include door frames 472 and 477 and a door panel G2. When the door frames 472 and 477 and the door panel G2 are assembled, the door body may have a substantially hexahedral structure.

The door frames 472 and 477 may be configured to include a plurality of frame components. In the present embodiment, the door frames 472 and 477 may include a front frame portion 472, a rear frame portion, an inner frame portion, and an upper frame portion 477. These may be coupled to each other to configure one door frame 472 and 477. Here, "front" is based on the front of the doors 450 and 470 (left side based on FIG. 5).

Referring to FIG. 7, the front frame portion 472 may be disposed at a front of the door frames 472 and 477. More precisely, the front frame portion 472 may form a front skeleton of the second door frames 472 and 477. A pair of front side plates may be provided on both sides of the front frame portion 472.

Referring again to FIG. 5, a state in which the image acquisition unit 600 is disposed on the second front panel G2a can be seen. In this case, the image acquisition unit 600 may be adhered to a rear surface of the second front panel G2a facing the accommodation space. More precisely, a part of a front surface of the image acquisition unit 600 and a part of the rear surface of the second front panel G2a may be adhered to each other.

Referring to FIG. 6, among second insulation panels G2b and G2c constituting a rear surface of the second door 470, a rear panel G2c may be exposed in a direction of the accommodation space. The see-through portion V may also be provided in the rear panel G2c. The see-through portion V of the rear panel G2c is disposed continuously with the see-through portion V of the second front panel G2a at a predetermined interval, and is assigned the same reference numeral. Among the second insulation panels G2b and G2c, the see-through portion V may also be provided in an inner panel G2b that is not exposed to the outside of the second door 470.

Referring to FIG. 6 and looking at the second door panel G2, the second door panel G2 may include a total of three panels. The three panels are configured with the second front panel G2a disposed at the foremost side, the inner panel G2b disposed inside the second door 470, and the rear panel G2c disposed at the rearmost side. Among these, the second front panel G2a is exposed forward (the front side of the cooking appliance main body 410, the X-axis direction of FIG. 4), and the rear panel G2c is exposed rearward, which is the opposite direction (rear side toward the second accommodation space).

The inner panel G2b and the rear panel G2c may constitute the second insulation panels G2b and G2c. The inner panel G2b and the rear panel G2c may be stacked with each other at a predetermined interval. In addition, an empty space between the inner panel G2b and the rear panel G2c may be in a vacuum state, thereby increasing an insulation effect. As another example, in the second insulation panels G2b and G2c, the inner panel G2b may be omitted, and only the rear panel G2c may be included. Reference numeral 476 indicates a second panel spacer 476 disposed between the inner panel G2b and the rear panel G2c to maintain an interval therebetween.

Installation areas T1-T4 may be provided between the second front panel G2a and the second insulation panels G2b and G2c. The installation areas T1-T4 are provided in an empty space between the second front panel G2a and the second insulation panels G2b and G2c. The installation areas T1-T4 may be portions in which the image acquisition unit 600 and a connector module are disposed.

In FIG. 7, in particular, an exploded perspective view of the door including the image acquisition unit 600 is illustrated.

The image acquisition unit 600 may include at least one image sensing device 670 and at least one lighting device 680.

In FIG. 7, for convenience, the image sensing device 670 is disposed at the center of the image acquisition unit 600, and two lighting devices 680 are disposed, one on each of left and right sides of the image sensing device 670. However, the present disclosure is not limited thereto.

The server 200 is configured to communicate with at least one client, for example, the cooking appliance 100 and/or a smartphone 100c (or a terminal), to transmit and receive data, and may acquire and process data for automatically cooking the object to be cooked (F). The server 200 may be a cloud server located remotely.

The smartphone 100c may transmit data regarding the object to be cooked (F) to the cooking appliance 100 and/or the server 200. In this case, the data transmitted to the cooking appliance 100 and/or the server 200 may include a captured image of the object to be cooked (F) and the like.

The smartphone 100c may receive data regarding the object to be cooked (F) from the cooking appliance 100 and/or the server 200. In this case, the data received from the cooking appliance 100 and/or the server 200 may include menu recommendation-related data according to the object to be cooked (F), automatic cooking-related data of the object to be cooked (F), and the like.

The cooking appliance 100 and/or the smartphone 100c may transmit an image captured of the object to be cooked (F) to the server 200. The server 200 may recognize the object to be cooked (F), and may generate not only menu recommendation, food material recommendation, and the like for the recognized object to be cooked (F), but also various control commands related to automatic cooking of the object to be cooked (F), and return the generated control commands to the cooking appliance 100 and/or the smartphone 100c.

The cooking appliance 100, the server 200, and the smartphone 100c may belong to the same network. At least one of the cooking appliance 100 and the smartphone 100c may communicate with the server 200 through a gateway or an Internet of Things (IoT) terminal, instead of directly communicating with the server 200.

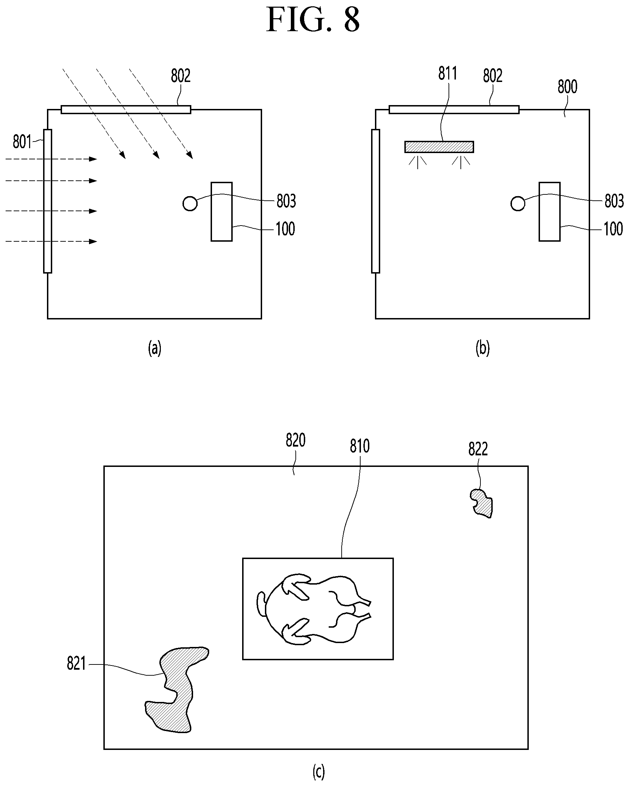

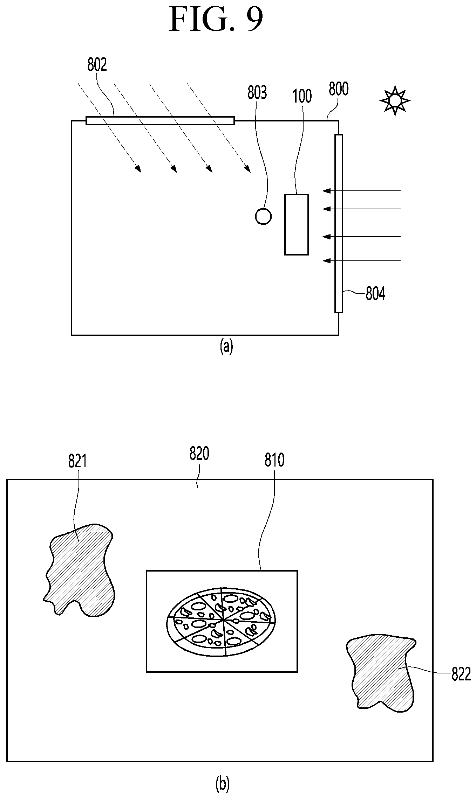

Next, a door reflection image will be described with reference to FIGS. 8 and 9.

The door reflection image may refer to a case in which, when the image acquisition unit 600 captures the object to be cooked (F) in the interior, an image of an object (for example, a user) located at a front of the cooking appliance 100 other than the object to be cooked (F) may be reflected by the door and included in the captured interior image. Such a door reflection image is mainly caused by an external light source located outside the cooking appliance 100, that is, sunlight or external lighting, whereby an image is formed on the door and is reflected and included during image/video capturing, thereby becoming noise. This may also be affected by a material of a window (for example, glass) constituting the door, but in the present disclosure, the effect of the material of the door window is excluded, and a method of removing or minimizing the already-generated door reflection image will be described.

FIG. 8 illustrates formation of a door reflection image in a general oven installation environment.

FIG. 9 illustrates formation of a door reflection image in a specific oven installation environment.

First, (a) of FIG. 8 illustrates formation of a door reflection image due to an external illuminance environment. In (a) of FIG. 8, as light is incident from the outside into a space 800 in which the cooking appliance 100 is located, a door reflection image is generated, and this may frequently occur when the cooking appliance 100 is used during breakfast or lunch time after sunrise.

Sunlight passing through windows 801 and 802 is incident into the space 800, and an image of an object (for example, a user) 803 located around the cooking appliance 100 may be formed on the door of the cooking appliance 100 by sunlight incident through various paths. Such a formed image may correspond to the above-described door reflection images (821 and 822 in (c) of FIG. 8).

(b) of FIG. 8 illustrates formation of a door reflection image due to an indoor illuminance environment. In (b) of FIG. 8, light is irradiated into the space 800 from a lighting device (for example, an LED lighting device, a fluorescent lamp, etc.) 811 installed in the space 800, and the light irradiated into the space 800 may cause an image of an object 803 located around the cooking appliance 100 to be formed on the door of the cooking appliance 100, similarly to (a) of FIG. 8. Unlike (a) of FIG. 8, in (b) of FIG. 8, a floor of the space 800 may also have an influence under the indoor illuminance environment. For example, when a floor material of the space 800 is formed of a material that reflects light with a bright color, a possibility that door reflection images (821 and 822 in (c) of FIG. 8) are formed may be increased.

(c) of FIG. 8 illustrates an interior image captured by the image acquisition unit 600 according to (a) or (b) of FIG. 8. In this case, the obtained interior image may include, for example, an object to be cooked region 810 including the object to be cooked (F) and other regions, that is, a background region 820. For convenience, the door reflection images 821 and 822 generated in (a) or (b) of FIG. 8 are illustrated as being included in the background region 820.

In (a) or (b) of FIG. 8, external light is incident to a front of the cooking appliance 800, but in (a) of FIG. 9, sunlight passing through a window 804 located at a rear of the cooking appliance 100 as well as a front side and a side surface of the cooking appliance 100 is incident into the space 800, and as illustrated in (b) of FIG. 9, door reflection images 823 and 824 are formed. In the above, sunlight irradiated onto the object 803 may be reflected by the object 803 and form an image on the door of the cooking appliance 100.

As illustrated in FIGS. 8 and 9, when door reflection images 821, 822, 823, and 824 are included in the interior image, this may degrade recognition and identification performance of the object to be cooked (F). That is, when the object to be cooked (F) is not accurately recognized or identified, various errors may occur in processes such as food material recommendation, menu recommendation, and automatic cooking. Therefore, in order to provide an accurate cooking service and improve user satisfaction, it is essential to accurately recognize and identify the object to be cooked (F) included in the interior image, and in this regard, it is preferable to remove or minimize the door reflection images 821, 822, 823, and 824 included in the interior image to minimize an influence thereof. Meanwhile, when the object 803 is a user, the door reflection images 821, 822, 823, and 824 may include personal information including a face of the user, and exposure of personal information may cause various problems. Accordingly, from this perspective as well, it is necessary to remove or minimize the door reflection images 821, 822, 823, and 824 from the interior image.

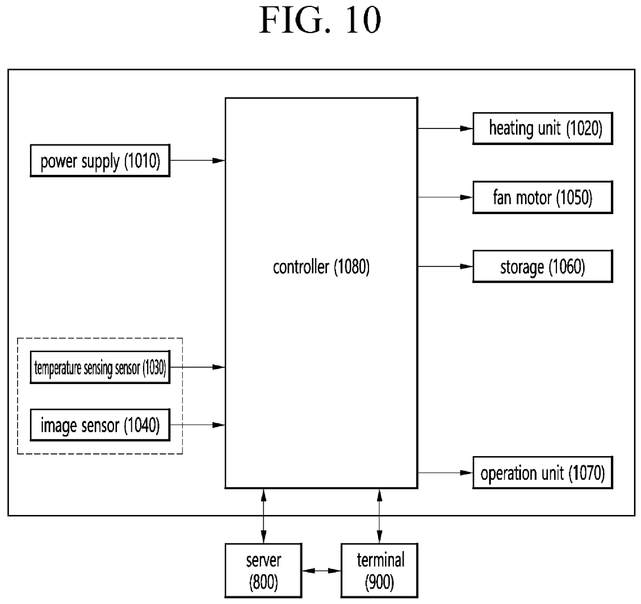

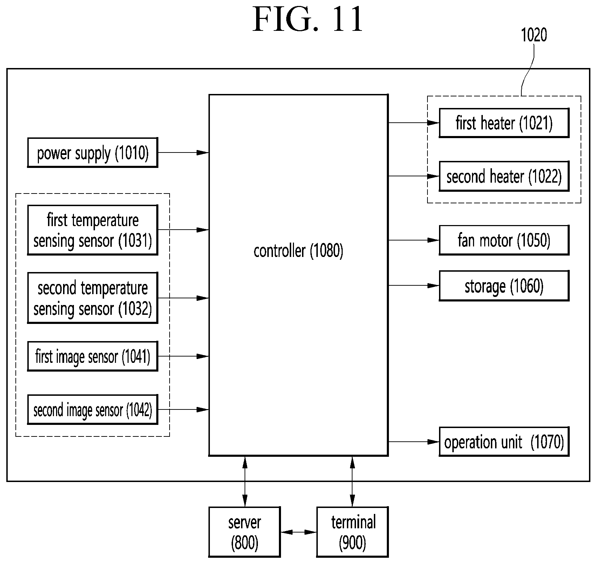

FIGS. 10 and 11 are control block diagrams of a cooking appliance according to an embodiment of the present disclosure.

In a cooking appliance 100 including at least one door 450 and 470 and a main body 410 according to at least one of various embodiments of the present disclosure, the main body 410 may include a storage 1060, an image acquisition unit configured to obtain an interior image including an object to be cooked, a heating unit configured to heat the object to be cooked, and a controller 1080 configured to identify the object to be cooked by adjusting brightness values of the object to be cooked and a background included in the interior image and to control a cooking operation for the object to be cooked.

FIG. 10 illustrates a control configuration of a single oven as illustrated in (a) of FIG. 4. FIG. 11 illustrates a control configuration of a double oven as illustrated in (b) of FIG. 4.

Referring to FIG. 10, the cooking appliance 100 employing a single oven may include at least one of a power supply 1010, a heating unit 1020, a sensor unit, a fan motor 1050, a storage 1060, an operation unit 1070, and a controller 1080. The controller 1080 may be included in or correspond to the processor 180 of FIG. 1. The processor 180 of FIG. 1 may further include all or part of the above-described components.

The power supply 1010 supplies power to the cooking appliance 100. In particular, the power supply 1010 may supply power required for the heating unit 1020, which is a heat source for heating the object to be cooked (F).

The heating unit 1020 may heat the object to be cooked (F). The heating unit 1020 may include at least one heater. In this case, the heater may include a convection heater. The heater may be an infrared heater that radiates infrared rays. The heater may be configured as a combination of a heating wire and an infrared heater. The heater 1020 may further include at least one Radio Frequency (RF) module (not shown) configured to heat the object to be cooked (F) using RF. The at least one RF module may replace at least one heater.

The heater 1020 may be preheated to a set temperature when preheating is required according to the object to be cooked (F) under control of the controller 1080.

The sensor unit may include a temperature sensing sensor 1030 and an image sensor 1040. The temperature sensing sensor 1030 may be included in the sensing unit 140 of FIG. 1. The image sensor 1040 may be a configuration additionally included in the input unit 120 of FIG. 1 or may correspond to the camera 121 of the input unit.

The temperature sensing sensor 1030 may be mounted inside the cooking appliance 100 to measure a temperature of a cooking chamber or an interior in which the object to be cooked (F) is placed.

The temperature sensing sensor 1030 may be provided in at least one probe (not shown) inserted into the object to be cooked (F) to measure a surface temperature or an internal temperature of the object to be cooked (F). In this case, a plurality of temperature sensing sensors may be provided in one probe.

The temperature sensing sensor 1030 may be mounted at one side of a door to sense a temperature of the interior and/or the object to be cooked (F).

Depending on a position where the temperature sensing sensor 1030 is provided, in a noncontact type, the temperature sensing sensor 1030 may be configured as an infrared sensor to measure a surface temperature of the object to be cooked (F) and/or a temperature of the interior. Alternatively, the temperature sensing sensor 1030 may be configured as a temperature sensor such as a thermistor to measure a temperature of the interior.

The image sensor 1040 may be the above-described image acquisition unit 600.

The fan motor 1050 may drive a fan for discharging heat generated when the object to be cooked (F) is heated by the heater 1020 to the outside.

The storage 1060 may correspond to the memory 170 of FIG. 1. The storage 1060 may store various information required for the cooking appliance 100 in advance or, when cooking-related information for the object to be cooked (F) is collected in real time, may store the information. Information stored in the storage 1060 may include, for example, ingredient information or menu information related to the object to be cooked (F), information on automatic cooking or/and manual cooking, and various information (for example, including events) generated before, during, and after cooking.

The operation unit 1070 may correspond to or be included in the output unit 150 of FIG. 1. Alternatively, the operation unit 1070 may further include a microphone 122 and a user input unit 123 of the input unit of FIG. 1.

The operation unit 1070 may output various types of information. The operation unit 1070 may be configured to receive various setting information of the cooking appliance 100 from a user or receive information for controlling a cooking operation, and may be configured as a device such as a physical operation button, a dial-type switch, or a wheel. The above-described physical operation button or the like may be implemented and provided in a touchable icon form without being separately present when a touch panel (or touch screen) is employed in the operation unit 1070.

The controller 1080 controls overall operations of the cooking appliance 100, and for this purpose, may transmit control commands to various components illustrated in FIG. 9.

The controller 1080 may control a microphone (not shown) for inputting information or a speaker (not shown) for outputting information when such components are further included in the output unit. The controller 1080 may control a pairing operation with an external display or a speaker (for example, an artificial intelligence speaker) that can be linked to the outside through Wi-Fi, Bluetooth, BLE, and the like, and may output alarm signals for various information through the paired external display or speaker.

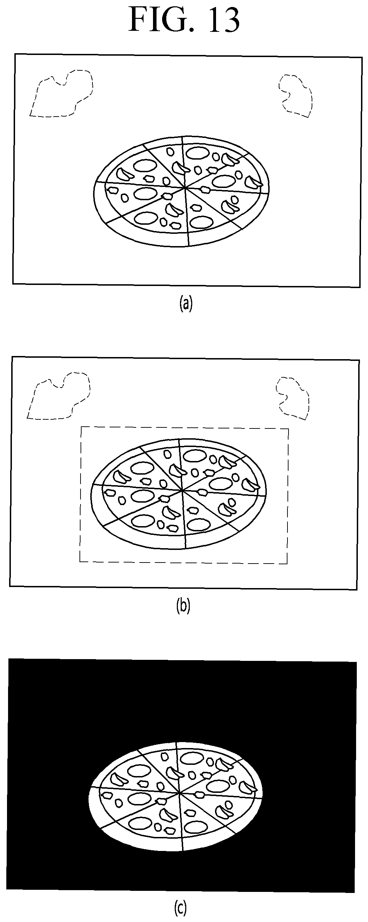

An operation of the controller 1080 will be described with reference to FIGS. 10 and 13 as follows.

As described above, the controller 1080 according to the present disclosure may identify the object to be cooked (F) by adjusting brightness values of the object to be cooked (F) and a background included in an interior image including the object to be cooked (F) obtained by the image sensor 1040, and may control a cooking operation for the identified object to be cooked (F).

In this case, the interior image may include at least one door reflection image. The at least one door reflection image may be located in a background region, an object to be cooked (F) region, or both the background region and the object to be cooked (F) region within the interior image.

Referring to (a) of FIG. 13, the controller 1080 may distinguish and identify the object to be cooked (F) region and the background region from the obtained interior image.

For this purpose, the controller 1080 may include the above-described artificial intelligence engine. In particular, the artificial intelligence engine may include an artificial intelligence learning model for classification of the object to be cooked (F) (or/and ingredients). The artificial intelligence learning model may classify object to be cooked (F) data into one of a plurality of categories or classes. For this purpose, the artificial intelligence learning model may collect a sufficient amount of training data (training dataset) to perform a classification task. The training data may be described by various features and may be labeled with one or more class labels. Such training data may be a training dataset for the object to be cooked (F).

The controller 1080 may train a classification model (learning model) using the collected data. In this case, classification algorithms may include decision trees, logistic regression, support vector machines, naive Bayes, neural networks, K-nearest neighbors, and the like, but are not limited thereto.

Thereafter, the controller 1080 may evaluate the learning model. That is, after training the learning model, the controller 1080 may evaluate performance of the learning model using test data or cross-validation.

The controller 1080 may classify input data using the trained model. That is, the learning model may predict which class the input data corresponds to based on features of the input data.

In summary, the controller 1080 may classify the object to be cooked (F) from an image, that is, the interior image, using the learning model.

Referring to (b) of FIG. 13, after the classification process, the controller 1080 may perform an object detection process. In this case, the object detection process refers to a process of identifying a position and a class (category) of an object in an image or a video. For example, with respect to the interior image obtained in the present disclosure, after classification, a position and a class of the object to be cooked (F) (or/and the door reflection image) may be identified.

For this purpose, the controller 1080 may collect data and perform labeling, that is, in order to train an object detection model, may collect a large-scale dataset composed of images or video frames, including label information on where each object is located and which class it belongs to.

Thereafter, the controller 1080 may select an object detection model. In this case, the object detection model may be selected using a deep learning architecture. The object detection model may include, for example, R-CNN, Fast R-CNN, Faster R-CNN, YOLO, Single Shot MultiBox Detector (SSD), and the like, but is not limited thereto.

The controller 1080 may train the selected object detection model using the collected dataset. The object detection model may process an input image, predict a bounding box of an object, and predict which class the corresponding object belongs to.

Thereafter, the controller 1080 may evaluate performance of the trained model using a test dataset and perform object detection and inference. That is, based on the trained model whose performance evaluation is completed, the controller 1080 may detect an object from an obtained interior image or video. The trained model may output probabilities for positions and classes of possible objects at each location in the image, and detect objects based on the probabilities.

Semantic segmentation refers to dividing an image at a pixel level, and each pixel has information on an object or class to which the pixel belongs. Through this, regions of different objects in the image may be accurately identified, and it is used to understand a semantic structure of the image.

Next, referring to (c) of FIG. 13, the controller 1080 may perform a semantic segmentation operation.

The controller 1080 may divide the obtained interior image at, for example, a pixel level. In this case, each pixel may include information on which object or class the pixel belongs to. Accordingly, the controller 1080 may accurately identify boundaries of all objects included in the interior image.

Thereafter, the controller 1080 may assign all pixels corresponding to the obtained interior image to specific class labels. For example, the controller 1080 may classify all objects included in the interior image, such as the object to be cooked (F), the background, and the door reflection image, into classes, and assign each pixel to the corresponding class.

The controller 1080 may perform the semantic segmentation operation using, for example, a deep-learning model. In this case, the deep learning architecture may include Fully Convolutional Networks (FCN), U-Net, SegNet, DeepLab, Mask R-CNN, and the like.

The controller 1080 may obtain accurate information on shapes, positions, and the like of objects (for example, the object to be cooked (F), a door reflection pattern, etc.) from the interior image through the semantic segmentation operation.

In relation to operations of the above-described artificial intelligence engine or model of the controller 1080, various data (images, videos, etc.) regarding menus and ingredients available in the cooking appliance 100 may be stored in advance in the storage 1060 or organized as a database (DB), and the stored data may be read and used when performing the corresponding operation.

According to an embodiment, the controller 1080 may distinguish the object to be cooked (F) region and the background region from the interior image through the above-described processes. Here, the background region may include at least one door reflection image region.

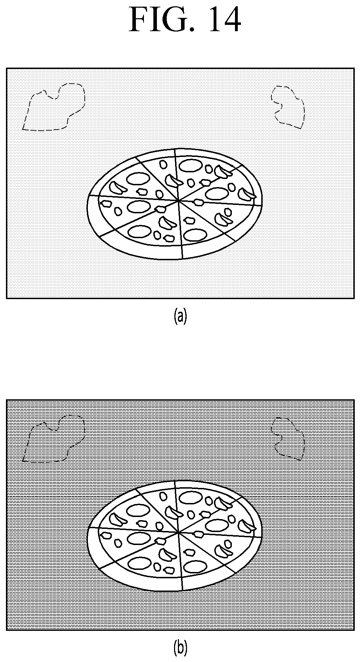

Meanwhile, as illustrated in FIG. 14, by adjusting transmittance of a door glass, an object to be cooked (F) region and a background region may be more accurately distinguished from an obtained interior image.

(a) of FIG. 14 illustrates an interior image before adjusting transmittance of the door glass, and (b) of FIG. 14 illustrates an interior image after adjusting the transmittance of the door glass. Relatively, as illustrated in (b) of FIG. 14, it may be seen that, as the transmittance of the door glass is adjusted, distinction between the object to be cooked (F) region and the background region becomes clearer.

In addition, when transmittance of the door glass can be arbitrarily changed, the controller 1080 may control the transmittance to be increased (for example, maximized) when the door is opened and closed and the object to be cooked (F) is detected in a cooking chamber, that is, an interior. Meanwhile, in FIG. 14, for example, when a door reflection image is included in the interior image, the controller 1080 may control the transmittance of the door glass.

The controller 1080 according to an embodiment of the present disclosure may control a brightness value of a background included in the interior image to be adjusted to be dark, and may control a brightness value of the object to be cooked (F) included in the interior image to be adjusted to be bright.

Meanwhile, in controlling the background region to be dark and the object to be cooked (F) region to be bright, the controller 1080 may operate as follows.

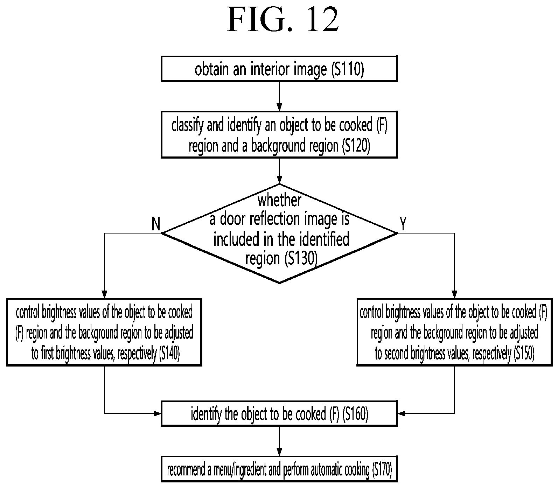

FIG. 12 is a flowchart illustrating an operation of a cooking appliance for minimizing a door reflection according to an embodiment of the present disclosure.

When an interior image is obtained (S110), the controller 1080 may classify and identify the interior image into an object to be cooked (F) region and a background region as described above (S120).

The controller 1080 may determine whether a door reflection image is included in each identified region (S130).

When it is determined in operation S130 that no door reflection image is included in each identified region, the controller 1080 may control brightness values of the identified object to be cooked (F) region and the background region to be adjusted to first brightness values, respectively (S140).

In this case, the controller 1080 may, if necessary, calculate in advance brightness values of the identified object to be cooked (F) region and the background region, respectively.

Meanwhile, the first brightness values are different brightness values for the object to be cooked (F) region and the background region. For example, since the object to be cooked (F) region is controlled to be bright and the background region is controlled to be dark, the first brightness values applied to the respective regions are different from each other. That is, the first brightness value applied to the object to be cooked (F) region may be, for example, a value greater than a calculated brightness value of the object to be cooked (F) region (for example, brighter), and conversely, the first brightness value applied to the background region may be, for example, a value smaller than a calculated brightness value of the background region (for example, darker).

When it is determined in operation S130 that a door reflection image is included in each identified region, the controller 1080 may control brightness values of the identified object to be cooked (F) region and the background region to be adjusted to second brightness values, respectively (S150).

As described above, the controller 1080 may, if necessary, calculate in advance brightness values of the identified object to be cooked (F) region and the background region, respectively.

Meanwhile, the second brightness values are different brightness values for the object to be cooked (F) region and the background region. For example, since the object to be cooked (F) region is controlled to be bright and the background region is controlled to be dark, the second brightness values applied to the respective regions are different from each other. That is, the second brightness value applied to the object to be cooked (F) region may be, for example, a value greater than a calculated brightness value of the object to be cooked (F) region (for example, brighter), and conversely, the second brightness value applied to the background region may be, for example, a value smaller than a calculated brightness value of the background region (for example, darker). In addition, the second brightness values may be different from the first brightness values. For example, for the object to be cooked (F) region, the second brightness value may be greater than the first brightness value. Accordingly, when a door reflection image is included in the interior image, the object to be cooked (F) region may be controlled to be brighter than in a case where no door reflection image is included. Conversely, for the background region, the second brightness value may be smaller than the first brightness value. Accordingly, when a door reflection image is included in the interior image, the background region may be controlled to be darker than in a case where no door reflection image is included.

In the present disclosure, the first brightness values and the second brightness values may each be specific values. Accordingly, in this case, information on current brightness values of the respective regions may not be essential. On the other hand, the first brightness values and the second brightness values may represent brightness adjustment differences to be applied relative to current values. In this case, for example, since the first brightness values and the second brightness values represent how much a brightness level is to be adjusted from current brightness values, it may be preferable that current brightness values in each region are calculated in advance. However, in this case, the controller 1080 may determine an adjustment level by applying a pre-fixed brightness value according to a type of the object to be cooked (F) expected from the identified object to be cooked (F) region.

According to another embodiment, the first brightness values and the second brightness values may represent a difference in brightness values between respective regions. For example, instead of individually applying brightness values such that the background region is dark and the object to be cooked region is bright, control may be performed such that a difference between a current brightness value of the background region and a current brightness value of the object to be cooked (F) region corresponds to the first brightness value or the second brightness value.

According to another embodiment, the controller 1080 may apply the above-described first brightness values or second brightness values regardless of whether a door reflection image is included in the interior image. For example, when an interior image is obtained and each region is identified, the controller 1080 may first apply the first brightness values, and thereafter, when identifying the object to be cooked (F) (S160), if identification is difficult, may apply the second brightness values again and perform operation S160 again.

According to another embodiment, the controller 1080 may apply the first brightness values only when it is clear that no door reflection image is included in the interior image, and may apply the second brightness values when whether the door reflection image is included is ambiguous.

According to another embodiment, the controller 1080 may apply the first brightness values when a single door reflection image is included in the interior image, and may apply the second brightness values when a plurality of door reflection images are included.

According to another embodiment, when a door reflection image is included in the interior image, the controller 1080 may apply the first brightness values when the door reflection image corresponds to a simple object, and may apply the second brightness values when the door reflection image does not correspond to a simple object (for example, an object corresponding to personal information such as a user's face or appearance).

According to another embodiment, the controller 1080 may apply the first brightness values when a difference between brightness values of respective regions identified in the interior image is equal to or greater than a first threshold, and may apply the second brightness values when the difference is less than the first threshold.

In the present disclosure, the difference in brightness values may be determined based on, for example, an average Average Pixel Level (APL) value of each region or based on a highest or lowest brightness value in the corresponding region.

When the object to be cooked (F) is identified according to operation S160, the controller 1080 may control menu/ingredient recommendation and automatic cooking (S170).

Meanwhile, when adjusting brightness of each region included in the interior image, the controller 1080 may process darkening or brightening as follows.

According to an embodiment, the controller 1080 may control a brightness value of a background region included in the interior image by using black data.

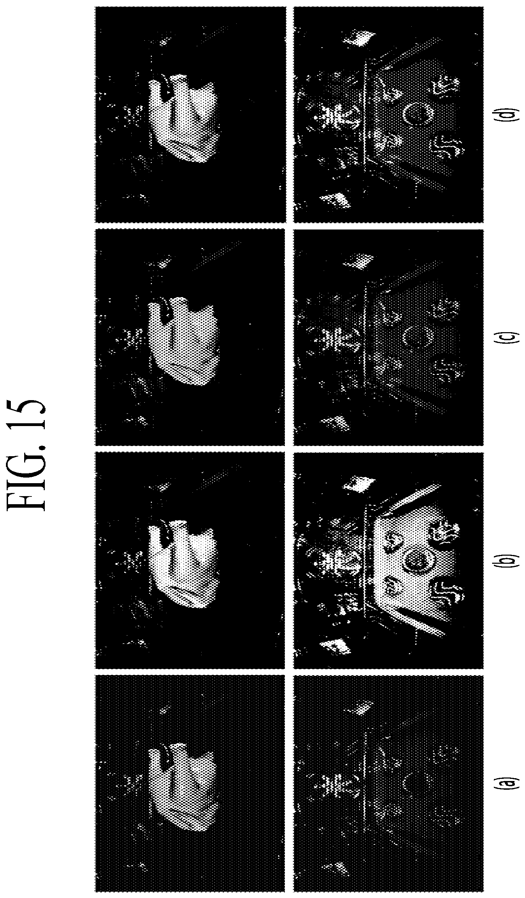

According to another embodiment, the controller 1080 may use various techniques for decreasing a brightness value with respect to the background region separated from the interior image, as illustrated in (a) to (d) of FIG. 15.

(a) of FIG. 15 illustrates a change in an image according to a histogram stretching technique, (b) of FIG. 15 illustrates a change in an image according to a histogram equalization technique, (c) of FIG. 15 illustrates a change in an image according to a gamma correction (static) technique, and (d) of FIG. 15 illustrates a change in an image according to a gamma correction (adaptive) technique.

In addition, according to one embodiment, the controller 1080 may control a brightness value of a background included in the interior image by using color data having a complementary relationship with a color of the object to be cooked (F).

The controller 1080 may control adjustment by using a color identical or similar to a color of a door reflection image included in the interior image. For example, when a door reflection image exists in a background region within the interior image, a color identical or similar to the color of the door reflection image may be applied to the background region, and in this case, a color identical or similar to a color having a complementary relationship with the applied color may be applied to the object to be cooked (F) region. Accordingly, the controller 1080 may easily recognize the object to be cooked (F) or the object to be cooked (F) region from the interior image. The reverse case is also applicable.

The controller 1080 may determine a color of the object to be cooked (F) included in the interior image as any one of a representative color selected when a plurality of colors exist, a color determined based on an APL average value when a plurality of colors exist, or a randomly selected color when a plurality of colors exist. This may be similarly applied to a background region as well as the object to be cooked (F) region.

For example, when determining a representative color, the controller 1080 may determine as the representative color any one of a color occupying the largest portion in the object to be cooked (F) region, a color having a highest brightness value or a value closest to white among colors present in the object to be cooked (F) region, or a color having a complementary relationship with the door reflection image when the door reflection image is included at least partially in the object to be cooked (F) region.

The controller 1080 may determine a representative color among a plurality of colors as a color selected by a user, a color at a central portion of the object to be cooked (F) region, or a color corresponding to an edge of the object to be cooked (F).

The controller 1080 may use an APL average value as it is as a brightness value of the object to be cooked (F) region or may control adjustment of the brightness value of the object to be cooked (F) region by using a color having a value closest to the APL average value among colors present in the object to be cooked (F) region.

The controller 1080 may receive, from an external server, a signal for identifying the object to be cooked (F) and a background included in the interior image and controlling a cooking operation for the object to be cooked (F).

The external server, that is, the AI server 200, may include an artificial intelligence engine for identifying the object to be cooked (F) and the background included in the interior image and controlling a cooking operation for the identified object to be cooked (F).

In addition, the controller 1080 may provide an automatic cooking service for the object to be cooked (F). When a type of the object to be cooked (F) is detected and identified, the controller 1080 may control information for performing an automatic cooking operation to be set in a corresponding component. According to an embodiment, the controller 1080 may map and store, in advance in the storage 1060, setting information regarding an automatic cooking operation according to a type of the object to be cooked (F). Accordingly, when a door of the cooking appliance 100 is closed and the object to be cooked (F) is detected and identified, the controller 1080 may call mapped automatic cooking operation setting information from the storage 1060 and control an operation by transmitting control commands for respective components based on the called automatic cooking operation setting information.

Referring to FIG. 11, a control configuration of a cooking appliance 100 employing a double oven may include at least one of a power supply 1010, a heater 1020, a sensor unit, a fan motor 1050, a storage 1060, and an output unit.

Unlike the cooking appliance 100 employing a single oven of FIG. 10, in the control configuration of the cooking appliance 100 employing a double oven of FIG. 11, the heater 1020 may include a plurality of heaters, for example, a first heater 1021 and a second heater 1022, and the sensor unit may include a first temperature sensing sensor 1031, a second temperature sensing sensor 1032, a first image sensor 1041, and a second image sensor 1042. Here, the first heater 1021, the first temperature sensing sensor 1031, and the first image sensor 1041 may operate for a first oven (for example, an upper oven), and the second heater 1022, the second temperature sensing sensor 1032, and the second image sensor 1042 may operate for a second oven (for example, a lower oven).

Other configurations of FIG. 11 are substantially similar to those described above with reference to FIG. 10.

The above description is merely illustrative of the technical idea of the present disclosure, and those skilled in the art to which the present disclosure pertains may make various modifications and variations without departing from the essential characteristics of the present disclosure. Accordingly, the embodiments disclosed in the present disclosure are intended not to limit but to explain the technical idea of the present disclosure, and the scope of the technical idea of the present disclosure is not limited by such embodiments. The scope of protection of the present disclosure should be construed according to the following claims, and all technical ideas within an equivalent scope thereto should be construed as being included in the scope of rights of the present disclosure.

### [Industrial Applicability]

The present disclosure relates to a cooking appliance and an operation method thereof, and has industrial applicability in that, by removing or minimizing a door reflection image from an interior image, recognition accuracy of an object to be cooked can be improved to enhance accuracy and/or convenience of use of the cooking appliance, and exposure of personal information included in the door reflection image can be minimized to resolve security issues.

## Claims

1. A cooking appliance comprising at least one door and a main body, wherein the main body comprises:
a storage;
an image acquisition unit configured to obtain an interior image including an object to be cooked;
a heating unit configured to heat the object to be cooked; and
a controller configured to identify the object to be cooked by adjusting brightness values of the object to be cooked and a background included in the interior image, and to control a cooking operation for the object to be cooked.

2. The cooking appliance of claim 1, wherein the interior image includes an image reflected by the at least one door.

3. The cooking appliance of claim 2, wherein the image reflected by the at least one door is located in a background region, an object to be cooked region, and both the background and object to be cooked regions, recognized from the interior image.

4. The cooking appliance of claim 2, wherein the controller is configured to control such that a brightness value of a background included in the interior image is adjusted to be dark, and a brightness value of the object to be cooked included in the interior image is adjusted to be bright.

5. The cooking appliance of claim 2, wherein the controller is configured to control the brightness value of the background included in the interior image to be adjusted to be dark by using black data.

6. The cooking appliance of claim 2, wherein the controller is configured to control the brightness value of the background included in the interior image to be adjusted by using color data having a complementary relationship with a color of the object to be cooked.

7. The cooking appliance of claim 2, wherein the controller controls adjustment by using a color identical or similar to a color of a door reflection image included in the interior image.

8. The cooking appliance of claim 6, wherein the controller is configured to determine a color of the object to be cooked included in the interior image as any one of a representative color selected when a plurality of colors exist, a color determined based on an Average Pixel Level (APL) average value when a plurality of colors exist, or a randomly selected color when a plurality of colors exist.

9. The cooking appliance of claim 8, wherein the controller determines the representative color among the plurality of colors based on any one of a user selection, a color occupying a largest region in the object to be cooked, or a color corresponding to an edge of the object to be cooked.

10. The cooking appliance of claim 4, wherein the controller sets a first reference value for a difference in brightness values between the background and the object to be cooked included in the interior image.

11. The cooking appliance of claim 10, wherein the controller acquires brightness values of the background and the object to be cooked included in the interior image, and controls adjustment of the brightness values of the background and the object to be cooked by comparing a difference between the acquired brightness values of the background and the object to be cooked with the first reference value.

12. The cooking appliance of claim 11, wherein the controller sets a second reference value for a difference in brightness values between the background and the object to be cooked included in the interior image, wherein the second reference value is applied when a door reflection image is included in the interior image.

13. The cooking appliance of claim 12, wherein the controller determines whether the door reflection image is included in the interior image, and when it is determined that the door reflection image is included in the interior image, controls adjustment of the brightness values of the background and the object to be cooked by applying the second reference value instead of the first reference value.

14. The cooking appliance of claim 1, wherein the controller identifies the object to be cooked and the background included in the interior image, and receives a signal for controlling a cooking operation for the object to be cooked from an external server.

15. The cooking appliance of claim 14, wherein the external server includes an artificial intelligence engine configured to identify the object to be cooked and the background included in the interior image and to control a cooking operation for the identified object to be cooked.
